# EUROPÄISCHE PATENTSCHRIFT

(11) **EP 3 274 615 B1**
(45) Veröffentlichungstag und Bekanntmachung des Hinweises auf die Patenterteilung: **07.11.2018**
(21) Anmeldenummer: 17726203.7
(22) Anmeldetag: 08.05.2017
(51) Int. Cl.: F16K 31/06

(54) **DOPPELANKERMAGNETVENTIL SOWIE BETRIEBSVERFAHREN**
DOUBLE-ARMATURE SOLENOID VALVE AND OPERATING METHOD
ÉLECTROVANNE À DOUBLE INDUIT ET PROCÉDÉ DE FONCTIONNEMENT

(30) Priorität: 14.06.2016 DE 102016110899
(43) Veröffentlichungstag der Anmeldung: 31.01.2018
(73) Patentinhaber: Kendrion (Markdorf) GmbH, 88677 Markdorf (DE); MAHLE International GmbH, 70376 Stuttgart (DE)
(72) Erfinder: VOPEL, David, 88213 Ravensburg (DE); KIENE, Marco, 88630 Aach-Linz (DE); ZELANO, Frank, 78112 St. Georgen (DE); FLÜHS, Joachim, 78050 VS-Villingen (DE); BERGFELD, Björn, 72336 Balingen (DE); Michael BRAUNHEIM, DE-73035 Göppingen (DE); Matthias GÄNSWEIN, DE- 73732 Esslingen (DE); Werner SCHADLER, AT-8430 Leibnitz (AT)
(74) Vertreter: BRP Renaud & Partner mbB Rechtsanwälte Patentanwälte Steuerberater
(86) Internationale Anmeldenummer: PCT/EP2017/060926
(87) Internationale Veröffentlichungsnummer: WO 2017/215842

(56) Entgegenhaltungen:
- DE-A1-102007 005 916
- DE-A1-102010 054 704
- US-A- 4 778 227

## Beschreibung

Die Erfindung betrifft ein Doppelankermagnetventil, gemäß dem Oberbegriff des Anspruchs 1, insbesondere zum Ablassen von Wasser aus Kraftstoffsystemen in Kraftfahrzeugen, insbesondere aus Dieselkraftstoffsystemen, mit einem ersten Anker und mit einem zweiten Anker, die entlang einer gemeinsamen, d.h. aus zwei axial benachbarten, bevorzugt axial fluchtenden Ankerverstellachsen bzw. -teilachsen gebildeten, Verstellachse (stirnseitig) axial einander gegenüberliegen und axial aufeinander zu in eine jeweilige Öffnungsposition und voneinander weg in eine jeweilige Schließposition verstellbar sind, und mit, vorzugsweise am Umfang beider Anker angeordneten, insbesondere gemeinsamen, noch weiter bevorzugt von einer gemeinsamen Spule bzw. Wicklung gebildeten, Spulenmitteln zum Erzeugen eines magnetischen Flusses in beiden Ankern zum Verstellen derselben entlang der Verstellachse aufeinander zu, d.h. in die jeweilige Öffnungsposition (zum Öffnen einer Einlassöffnung und einer Auslassöffnung des Ventils) bei entsprechender Bestromung der Spulenmittel, sowie mit mindestens einer den ersten Anker von dem zweiten Anker weg, d.h. in Richtung seiner Schließposition federkraftbeaufschlagenden ersten Rückstellfeder und mindestens einer den zweiten Anker von dem ersten Anker axial weg, d.h. in Richtung seiner Schließposition, federkraftbeaufschlagenden zweiten Rückstellfeder, wobei dem ersten Anker ein, bevorzugt am ersten Anker angeordnetes, insbesondere elastomeres, erstes Dichtelement zum Abdichten einer auf der vom zweiten Anker abgewandten Axialseite des ersten Ankers angeordneten Einlassöffnung für unter Druck stehendes Fluid, insbesondere für das vorerwähnte Wasser aus einem KFZ-Kraftstoffsystem, zugeordnet ist und wobei dem zweiten Anker ein, bevorzugt am zweiten Anker angeordnetes, vorzugsweise elastomeres, zweites Dichtelement zum Abdichten einer auf der vom ersten Anker abgewandten Axialseite des zweiten Ankers angeordneten Auslassöffnung für das Fluid, insbesondere ein Flüssigkeit, zugeordnet ist, wobei die Einlassöffnung und die Auslassöffnung über einen, bevorzugt von einem die Anker aufnehmenden, besonders bevorzugt radial außen von einem sich axial erstreckenden Ankerführungsrohr begrenzten Ankerraum gebildeten, Fluidkanal fluidleitend verbunden sind. Die erwähnten Dichtelemente sind bevorzugt am jeweiligen Anker festgelegt und zusammen mit diesen axial verstellbar. Bei einer alternativen Ausführungsform können die Dichtelemente auch ortsfest im Bereich des jeweiligen Ventilsitzes vorgesehen werden.

Ferner betrifft die Erfindung ein Verfahren gemäß dem Oberbegriff des Anspruchs 12 zum Betreiben eines derartigen Doppelankermagnetventils, wobei die, insbesondere gemeinsamen, Spulenmittel bestromt werden und dadurch die Anker entlang der Verstellachse zum Öffnen der Einlassöffnung und der Auslassöffnung axial aufeinander zu verstellt werden (entgegen der jeweiligen Federkraft der zugeordneten Rückstellfeder), wodurch Fluid, vorzugsweise eine Flüssigkeit, insbesondere Wasser aus einem KFZ-Kraftstoffsystem, bevorzugt aus einem KFZ-Dieselkraftstoffsystem, durch die Einlassöffnung in den Verbindungskanal strömt und durch diesen zur Auslassöffnung und durch diese hindurch, und dass zum Schließen der Einlassöffnung und der Auslassöffnung die Bestromung der Spulenmittel reduziert oder unterbrochen wird, wodurch der erste Anker von der ersten Rückstellfeder in Richtung zur Einlassöffnung in seine Schließposition bewegt wird und der zweite Anker von der zweiten Rückstellfeder in Richtung zur Auslassöffnung in seine Schließposition.

Ferner führt die Erfindung auf ein Kraftstoffsystem, insbesondere ein Dieselkraftstoffsystem in einem Kraftfahrzeug mit einem erfindungsgemäßen Doppelankermagnetventil, mit dem (aus dem Kraftstoff abgeschiedenes) Wasser aus dem Kraftstoffsystem ableitbar ist, beispielsweise in einen entsprechenden Tank oder in Richtung Untergrund.

Bei Dieselkraftstoff, insbesondere in Schwellen- und Entwicklungsländern besteht das Problem, dass dieser einen großen Wasseranteil enthält, teilweise aufgrund absichtlicher Beimischung, teilweise aufgrund schlechter Produktions- und/oder Lagerbedingungen bzw. -technologien. Damit das im Dieselkraftstoff enthaltene Wasser nicht in den Verbrennungsmotor gelangt, sind unterschiedlichste Technologien zur Abscheidung des Wassers aus dem Dieselkraftstoff bekannt geworden. Das abgeschiedene Wasser wird je nach Fahrzeugtechnologie manuell oder automatisiert abgelassen. Für das automatisierte Ablassen von sich üblicherweise in einem Wasserspeicher des KFZ-Kraftstoffsystems unter Druck befindlichen Wassers sind Doppelankermagnetventile bekannt geworden, wie diese beispielsweise in der DE 10 2007 005 916 A1 beschrieben sind. Die bekannten Doppelankermagnetventile haben sich bewährt - es bestehen jedoch, insbesondere im Hinblick auf entsprechende Umweltauflagen, Bestrebungen die Sicherheit solcher Doppelankermagnetventile weiter zu verbessern, um ein unbeabsichtigtes Ablassen von Kraftstoff, insbesondere Dieselkraftstoff in die Umwelt sicher zu vermeiden.

Bei dem aus der DE 10 2007 005 916 A1 bekannten Doppelmagnetventil sind zwei Anker axial entlang einer gemeinsamen Verstellachse stirnseitig einander gegenüberliegend angeordnet und werden durch Bestromen einer gemeinsamen Spule aufeinander zu in eine Mitten- bzw. jeweilige Öffnungsstellung bewegt. Hierdurch wird eine Einlassöffnung in den Ankerraum geöffnet, durch die unter Druck stehendes Wasser strömt, welches den Ankerraum über die Auslassöffnung wieder verlässt. Zum Schließen der beiden Öffnungen wird die Bestromung der Spule unterbrochen und die beiden Anker werden von einer gemeinsamen Rückstellfeder, die sich mit ihren beiden axialen Enden an jeweils einem der Anker abstützt hin in die jeweilige Schließposition, d.h. in Richtung der jeweiligen Öffnung (Einlassöffnung bzw. Auslassöffnung) bewegt. Gemäß der Lehre der Druckschrift können anstelle einer gemeinsamen Druckfeder separate, jeweils als Zugfeder ausgebildete Rückstellfedern eingesetzt werden. Bei dem bekannten Doppelankermagnetventil werden nach Unterbrechung der Spulenbestromung die Anker gleichförmig in die jeweilige Schließposition bewegt, so dass die Einlassöffnung und die Auslassöffnung gleichzeitig geschlossen werden.

Aus der fachfremden US 4,778,227 ist ein Doppelankermagnet eines Bremssystems bekannt. Das Doppelankermagnetventil umfasst zwei axial benachbart zu Spulenmitteln angeordnete Flachanker, die voneinander weg mit jeweils einer Feder in Richtung einer jeweiligen Schließposition kraftbeaufschlagt sind. Die den einer Einlassöffnung zugeordneten Flachanker federkraftbeaufschlagende Feder ist dabei schwächer ausgelegt als die den anderen, der Auslassöffnung zugeordneten Flachanker federkraftbeaufschlagende Feder, so dass die Einlassöffnung bei Unterbrechung der Bestromung der Spulenmittel langsamer verschlossen wird als die Auslassöffnung.

Ausgehend von dem vorbekannten Stand der Technik liegt der Erfindung die Aufgabe zugrunde, ein verbessertes Doppelankermagnetventil sowie ein Verfahren zum Betreiben eines solchen anzugeben, mit denen die Sicherheit gegen unbeabsichtigtes Abgeben einer Flüssigkeit, insbesondere von Kraftstoff durch die Auslassöffnung an die Umwelt erhöht wird.

Diese Aufgabe wird hinsichtlich des Doppelankermagnetventils mit den Merkmalen des Anspruchs 1 gelöst, d.h. bei einem gattungsgemäßen Doppelankermagnetventil dadurch, dass dem ersten und/oder dem zweiten Anker, insbesondere strukturelle, Mittel zur Realisierung unterschiedliche Schließzeitpunkte zum Schließen der Einlassöffnung und der Auslassöffnung zugeordnet sind, derart, dass nach Unterbrechung oder Reduzierung der Spulenmittelbestromung die Einlassöffnung mittels des ersten Ankers schneller verschließbar ist bzw. verschlossen wird, insbesondere um mindestens 25 ms, vorzugsweise mindestens 50 ms schneller verschließbar ist bzw. verschlossen wird, als die Auslassöffnung mittels des zweiten Ankers, und dass eine bezogen auf den ersten Anker verstellkraftwirksame Einlassöffnungsquerschnittsfläche kleiner ist, vorzugsweise um mindestens 25 %, noch weiter bevorzugt um mindestes 33 % kleiner ist als eine bezogen auf den zweiten Anker verstellkraftwirksame Auslassquerschnittsfläche.

Hinsichtlich des (Betriebs-)Verfahrens wird die Aufgabe mit den Merkmalen des Anspruchs 12 gelöst, d.h. bei einem gattungsgemäßen Verfahren dadurch, dass nach Unterbrechung oder Reduzierung der Spulenmittelbestromung der zweite Anker seine Schließposition zum Schließen der Auslassöffnung langsamer bzw. später erreicht, insbesondere um mindestens 25 ms schneller, noch weiter bevorzugt um mindestens 50 ms später als der erste Anker seine Schließposition zum Schließen der Einlassöffnung und sich der Fluiddruck im Verbindungskanal, d.h. in einem Bereich axial zwischen der Einlassöffnung und der Auslassöffnung, auf ein Druckniveau abbaut, das geringer ist, insbesondere um mindestens 25 %, vorzugsweise mindestens 40 % geringer ist als ein Fluiddruck in Strömungsrichtung des Fluids vor der Einlassöffnung (bei geschlossener Einlassöffnung).

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Um die gewünschte, erhöhte Sicherheit gegen eine Undichtigkeit des Doppelankermagnetventils zu gewährleisten und damit das Risiko einer Kraftstoffabgabe an die Umwelt auf ein Minimum zu reduzieren, schlägt die Erfindung mehrere Maßnahmen vor.

Ein Kerngedanke der Erfindung besteht darin, den axial zwischen der Einlassöffnung und der Auslassöffnung angeordneten Ankern voneinander separate Rückstellfedern zuzuordnen, die bevorzugt beide als Druckfedern ausgebildet sind, die also bevorzugt den jeweiligen Anker in Richtung seiner Schließposition bzw. der dem jeweiligen Anker zugeordneten Öffnung (Einlassöffnung bzw. Auslassöffnung) kraftbeaufschlagen, um für den Fall eines Federbruchs oder einer Verklemmung einer der beiden Rückstellfedern trotzdem ein sicheres Schließen einer der Öffnungen sicherzustellen, so dass ein erheblicher Flüssigkeitsaustritt durch die Auslassöffnung in jedem Fall verhindert wird.

Eine weitere wesentliche Maßnahme zur Erhöhung der Sicherheit des erfindungsgemäßen Doppelankermagnetventils besteht darin, unterschiedliche Zeitpunkte durch Schließen der Einlassöffnung und der Auslassöffnung zu realisieren. Hierzu sind entsprechende Mittel vorgesehen bzw. dem ersten und/oder dem zweiten Anker zugeordnet, mit denen gewährleistet wird, dass der erste Anker nach der Unterbrechung oder Reduzierung der Spulenmittelbestromung seine Schließposition zeitlich vor dem zweiten Anker erreicht, d.h. zeitlich bevor der zweite Anker seine Schließposition erreicht, um die ihm zugeordnete Auslassöffnung zu schließen. Hierdurch wird gewährleistet, dass ausreichend Zeit für einen Fluiddruckabbau im Verbindungskanal, d.h. zwischen Einlassöffnung und Auslassöffnung, insbesondere im Ankerraum für die Anker, besteht, da Flüssigkeit auch noch nach Schließen der Einlassöffnung mittels des zweiten Ankers über die Auslassöffnung abströmen kann. Dies führt dann wiederum dazu, dass nach dem (späteren) Schließen der Auslassöffnung der Fluiddruck im Verbindungskanal geringer ist als der Fluiddruck auf der Hochdruckseite des Ventils, d.h. in einem Bereich in Strömungsrichtung vor der Einlassöffnung. Kommt es nun im Fehlerfall dazu, dass über eine Undichtigkeit an der dem hochdruckseitigen bzw. ersten Anker zugeordneten Einlassöffnung Flüssigkeit unter hohem Druck in den Verbindungskanal nachströmt, wird eine fluiddruckinduzierte Schließkraft auf den zweiten Anker erhöht und der auslassseitige Anker (zweiter Anker) hält die Auslassöffnung sicher verschlossen. Dabei sind die Spulenmittel bevorzugt so ausgelegt bzw. auf das Druckflächenverhältnis am zweiten Anker abgestimmt, dass die durch die zum Aufeinander zu Verstellen der Anker vorgesehene Bestromung der Spulenmittel erzeugbare Magnetkraft nicht ausreicht, den zweiten Anker im Fehlerfall, d. h. bei einer Leckage an der Einlassöffnung entgegen dem im Verbindungskanal am zweiten Anker anliegenden, dem Fluiddruck in Strömungsrichtung vor der Einlassöffnung entsprechenden Fluiddruck (Schließdruck) des Fluids bzw. der daraus resultierenden Schließkraft zu öffnen.

Eine weitere Maßnahme zur Erhöhung der Betriebssicherheit des erfindungsgemäßen Doppelankermagnetventils besteht darin, die Ventilsitzquerschnittsflächen der Einlassöffnung und der Auslassöffnung, also die bezogen auf die Anker fluiddruckkraftwirksamen und damit verstellkraftwirksamen Öffnungsquerschnittsflächen der Einlassöffnung und der Auslassöffnung bzw. der zugehörigen Ventilsitze unterschiedlich groß zu gestalten, und zwar derart, dass die verstellkraftwirksame Auslassöffnungsquerschnittsfläche größer bemessen als die verstellkraftwirksame Einlassöffnungsquerschnittsfläche, um somit die auf die Anker wirkenden fluiddruckkraftbedingten Öffnungs- und Schließkräfte zu optimieren bzw. zu erhöhen. Insbesondere wird durch diese Maßnahme im, vorzugsweise radial außen von einem Ankerführungsrohr begrenzten, Verbindungskanal eine höhere fluiddruckinduzierte Schließkraft auf den ablassseitgen, zweiten Anker ausgeübt, so dass dieser sicher an seinem Ventilsitz anliegt und die Auslassöffnung verschlossen bleibt, insbesondere bei einer Druckerhöhung im Verbindungskanal bei einer zuvor erläuterten, einlassöffnungsseitigen Undichtigkeit. Gleichzeitig wird die auf den ersten Anker wirkende fluidische Öffnungskraft aufgrund der zum Vergleich zur Auslassöffnungsquerschnittsfläche kleineren Einlassöffnungsquerschnittsfläche reduziert.

Eine Möglichkeit zur Ausgestaltung der Mittel zur Erzielung unterschiedlicher Schließzeitpunkte besteht darin, die unterschiedlichen, den beiden Ankern zugeordneten Rückstellfedern unterschiedlich zu dimensionieren und/oder vorzuspannen, derart, dass die erste Rückstellfeder den ersten Anker in seiner Schließposition und/oder seiner Öffnungsposition mit einer größeren Federkraft beaufschlagt als die zweite Rückstellfeder den zweiten Anker in seiner entsprechenden Schließ- oder Öffnungsposition. Anders ausgedrückt ist die Federkraft, mit der die erste Rückstellfeder den ersten Anker beaufschlagt größer als die Federkraft, mit der die zweite Rückstellfeder den zweiten Anker federkraftbeaufschlagt. Zu diesem Zweck kann als erste Rückstellfeder eine Feder mit einer höheren Federkonstante als die zweite Rückstellfeder eingesetzt werden und/oder die erste Rückstellfeder kann mit einer größeren Vorspannkraft vorgespannt angeordnet sein. Bevorzugt unterscheiden sich die Federkräfte in der jeweiligen Schließ- und/oder Öffnungsposition um mindestens 25 %, noch weiter bevorzugt mindestens 40 %.

Grundsätzlich ist es denkbar, dass die erste und/oder die zweite Rückstellfeder als Zugfeder ausgebildet sind/ist - bevorzugt ist eine alternative Ausführungsform mit mindestens einer, vorzugsweise zwei Druckfedern. Für diesen bevorzugten Fall stützen sich die erste und die zweite (Druck-)Rückstellfeder jeweils unmittelbar axial an dem zugehörigen ersten bzw. zweiten Anker ab und ganz besonders bevorzugt jeweils axial mit den einander zugewandten Enden an einem gemeinsamen, in einem Bereich zwischen den Ankern angeordneten mindestens eine Durchlassöffnung für Flüssigkeit aufweisenden Widerlagerelement.

Zur Erzielung unterschiedlicher Schließzeitpunkte ist es zusätzlich oder alternativ zur Realisierung unterschiedlicher Federkräfte möglich, den ersten und den zweiten Anker, insbesondere im Hinblick auf die Erzielung unterschiedlicher Magnetflussleiteigenschaften geometrisch unterschiedlich zu gestalten, beispielsweise, indem, wie später noch erläutert werden wird, im ersten Anker abschnittsweise durch eine entsprechende Materialreduzierung in einem Axialabschnitt ein erhöhter magnetischer Widerstand erzeugt wird. Zusätzlich oder alternativ ist es möglich, den ersten und den zweiten Anker aus voneinander unterschiedlich magnetisch flussleitenden Materialien auszugestalten, insbesondere derart, dass der erste Anker aus einem besser magnetisch flussleitenden Material ausgebildet ist als der zweite Anker. Zusätzlich oder alternativ ist es bevorzugt, dass die beiden Anker aus voneinander unterschiedlichen, unterschiedliche magnetische Remanenzen aufweisenden Materialien ausgebildet sind, insbesondere derart, dass die magnetische Remanenz des Ankermaterials des zweiten Ankers größer ist als die des ersten Ankermaterials. Zusätzlich oder alternativ ist es wiederum möglich den ersten Anker mit einer geringeren Masse auszugestalten als den zweiten Anker, um somit eine schnellere Bewegung bzw. ein dynamischeres Verhalten des ersten Ankers zu erreichen bzw. zu unterstützen.

Wie sich aus den vorstehenden Ausführungen bereits ergibt ist es im Hinblick auf die Ausgestaltung der Mittel zur Realisierung unterschiedlicher Schließzeiten möglich und bevorzugt, zusätzlich oder alternativ zur Realisierung unterschiedlicher Rückstellfederausgestaltungen oder -vorspannungen und/oder unterschiedlicher Ankermassen die Mittel magnetisch wirksam auszugestalten, derart, dass die Verstellbewegung des zweiten Ankers zur Erzielung eines späteren Schließzeitpunktes verzögert und/oder verlangsamt wird, verglichen mit dem ersten Anker bzw. dessen Verstellbewegung.

Ganz besonders bevorzugt sind die Mittel dabei derart ausgebildet, dass die magnetische Remanenz im zweiten Anker größer ist als im ersten Anker, der zweite Anker also eine größere Restmagnetisierung aufweist bzw. sich das Magnetfeld im zweiten Anker langsamer abbaut als im ersten Anker. Zusätzlich oder alternativ kann, insbesondere durch eine geometrisch unterschiedliche Gestaltung der magnetische Flusswiderstand im ersten Anker größer ausgestaltet werden als im zweiten Anker, insbesondere durch das Vorsehen eines radialen Verengungsabschnittes im ersten Anker zur Reduzierung des axialen magnetischen Flussleitquerschnittes des ersten Ankers.

Ganz besonders bevorzugt ist eine Ausführungsform des Doppelankermagnetventils, bei der der erste Anker einen Bestandteil des magnetischen Flusskreises für den zweiten Anker bildet, indem der erste Anker einen (axial verstellbaren) Kern für den zweiten Anker realisiert, in Richtung dessen der zweite Anker bei Bestromung der Spulenmittel magnetkraftbeaufschlagt ist. Ebenso ist es bevorzugt, wenn der zweite Anker einen Bestandteil des magnetischen Flusskreises des ersten Ankers bildet, indem der zweite Anker einen (axial verstellbaren) Kern für den ersten Ankers bildet, in Richtung dessen der erste Anker bei Bestromung der Spulenmittel magnetkraftbeaufschlagt ist. Somit ziehen sich der erste und der zweite Anker bei Bestromung der, bevorzugt gemeinsamen, insbesondere eine einzige Spule umfassenden, Spulenmittel gegenseitig an und bewegen sich aufeinanderzu. Auf von den Ankern separate magnetische Kerne im magnetischen Flusskreis kann somit mit Vorteil verzichtet werden.

Von besonderem Vorteil, insbesondere im Hinblick auf die Robustheit, Langlebigkeit und eine exakte Schaltung bzw. ein exaktes Schließverhalten der Einlass- und Auslassöffnung ist es bevorzugt, den ersten und den zweiten Anker nicht als Flachanker sondern jeweils als bolzen- bzw. stößelförmiger Anker auszubilden, der in der Verstellrichtung eine größere Erstreckung aufweist als senkrecht hierzu, also als in radialer Richtung.

Ganz besonders bevorzugt ist es, wenn die beiden im Ankerraum aufgenommenen Anker in einem Bereich radial innerhalb der Spulenmittel angeordnet sind, also radial außen von einer elektrischen Spulenwicklung umgeben sind, wodurch insbesondere bei einer stößelförmigen Ausgestaltung der Anker ein besonders robustes und langlebiges System erhalten wird. Darüber hinaus wird die axiale Baulänge minimiert.

Die Erfindung führt auch auf ein Verfahren zum Betreiben eines wie zuvor ausgebildeten Doppelankermagnetventils. Im Rahmen des Verfahrens wird die Bestromung der Spulenmittel unterbrochen oder reduziert, so dass die beiden Anker von der jeweiligen, bevorzugt jeweils als Druckfeder ausgestalteten Rückstellfeder in Richtung der jeweiligen Schließposition, d.h. in Richtung der jeweiligen Öffnung verstellt werden, also der erste Anker gegen die Einlassöffnung bzw. den Einlassöffnungsventilsitz und der zweite Anker gegen die Auslassöffnung bzw. den Auslassöffnungsventilsitz, wobei (durch das Vorsehen entsprechender, zuvor im Rahmen des Doppelankermagnetventils erläuterter Mittel) der erste Anker seine Schließposition zum dichten Verschließen der Einlassöffnung schneller erreicht als der zweite Anker seine Schließposition zum Schließen der Auslassöffnung erreicht, wodurch nach dem Schließen der Einlassöffnung bis zum (verspäteten) Schließen der Auslassöffnung Fluid aus dem Verbindungskanal durch die Auslassöffnung abströmen kann und somit der Fluiddruck im Verbindungskanal reduziert wird.

Wenn es im Rahmen des Betriebsverfahrens zu einer Undichtigkeit im Bereich der Einlassöffnung kommt, strömt im Rahmen des Verfahrens Fluid, insbesondere Wasser, welches aus einem Kraftstoff, vorzugsweise einem Dieselkraftstoff abgeschieden wurde in den Verbindungskanal, wodurch der zweite Anker in Richtung seiner Schließposition (stärker) fluiddruckkraftbeaufschlagt wird - diese ist dann größer als eine ggf. in die entgegengesetzte Richtung wirkende, fluiddruckinduzierte Öffnungskraft auf den Anker, die von einer ggf. in einer der Auslassöffnung in Strömungsrichtung nachgeordneten Ablassleitung befindlichen Flüssigkeit resultiert. Die aus der fluiddruckinduzierten Öffnungskraft und der fluiddruckinduzierten Schließkraft resultierende fluiddruckinduzierte Schließkraft ist dabei bevorzugt, durch eine entsprechende Auslegung der Spulenmittel kleiner als die von den Spulenmitteln erzeugbare magnetische Öffnungskraft, sodass in dem vorerwähnten Fehlerfall einer Undichtigkeit im Bereich der Einlassöffnung der zweite Anker durch Magnetkraftbeaufschlagung nicht mehr in Richtung seiner Öffnungsposition verstellbar ist und somit das Doppelankermagnetventil sicher geschlossen bleibt bzw. durch den Fluiddruck verriegelt ist bzw. bleibt.

Gemäß einer besonders bevorzugten Ausgestaltung des Verfahrens zum Betreiben eines erfindungsgemäßen Doppelankermangetventils ist vorgesehen, dass, insbesondere durch eine entsprechend geometrische Ausgestaltung der Anker, insbesondere des ersten Ankers, dass der magnetische Fluss durch das Vorsehen eines entsprechenden magnetischen Widerstandes im ersten Anker schneller in Sättigung geht als im zweiten Anker. Zusätzlich oder alternativ ist vorgesehen, dass, insbesondere durch eine entsprechende Materialwahl der Anker sich die magnetische Flussdichte im zweiten Anker nach dem Unterbrechen oder Reduzieren der Spulenmittelbestromung langsamer abbaut als im ersten Anker. Hierzu ist der zweite Anker bevorzugt aus einem Material mit einer größeren magnetischen Remanenz als das Material des ersten Ankers ausgestaltet.

Die Erfindung führt auch auf ein Kraftstoffsystem, insbesondere ein Dieselkraftstoffsystem in einem Kraftfahrzeug mit einem erfindungsgemäßen Doppelankermagnetventil, welches in dem Kraftstoffsystem so angeordnet ist, dass mit diesem durch entsprechende Ansteuerung von den den Spulenmitteln zugeordneten Steuermitteln Wasser aus dem Kraftstoffsystem ablassbar ist, insbesondere in einen am KFZ vorgesehenen Wassertank hinein, der dann einen Bestandteil des erfindungsgemäßen Systems bildet. Alternativ ist es aufgrund der erfindungsgemäßen Ausgestaltung des Doppelankermagnetventils, die ein Ablassen von Kraftstoff sicher verhindert, auch möglich das Wasser unmittelbar, insbesondere nach Durchlaufen eines Filters an die Umgebung abzugeben. Auch ist es bei entsprechender Ausbildung des Kraftstoffsystems möglich, das Wasser an fakultative Verdampfungsmittel des Kraftstoffsystems zu leiten, um das Wasser zu verdampfen. Bevorzugt sind die Verdampfungsmittel Bestandteil des Abgasstrangs, insbesondere derart, dass das Wasser von dem Doppelankermagnetventil im Rahmen des Systems dem Abgasstrang zur Verdampfung zugeführt wird bzw. zuführbar ist.

Weitere Vorteile, Merkmale und Einzelheiten der Erfindung ergeben sich aus der nachfolgenden Beschreibung bevorzugter, erfindungsgemäßer Ausführungsbeispiele sowie anhand der Zeichnungen.
Diese zeigen in:
- Fig. 1:: ein erstes erfindungsgemäßes Ausführungsbeispiel eines Doppelankermagnetventils mit zwei im Hinblick auf die jeweils ausgeübte Federschließkraft unterschiedlich dimensionierten und/oder vorgespannten Rückstellfedern sowie unterschiedlichen Öffnungsquerschnitten, und
- Fig. 2:: ein alternatives Ausführungsbeispiel eines erfindungsgemäßen Doppelankermagnetventils mit zusätzlich zu unterschiedlichen Öffnungsquerschnitten magnetisch ausgebildeten Mitteln zur Erzielung unterschiedlicher Schließzeitpunkte der Öffnungen.

In den Figuren sind gleiche Elemente und Elemente mit der gleichen Funktion mit den gleichen Bezugszeichen gekennzeichnet.

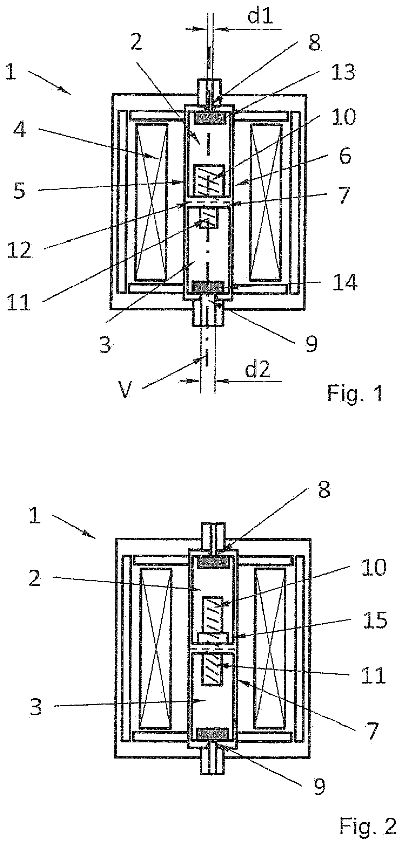

In Fig. 1 ist ein erstes Ausführungsbeispiel eines erfindungsgemäßen Doppelankermagnetventils 1 gezeigt. Dieses umfasst einen ersten Anker 2 und einen zweiten Anker 3, die entlang einer gemeinsamen Verstellachse V stirnseitig einander gegenüberliegend angeordnet sind. Den beiden Ankern 2, 3 sind gemeinsame Spulenmittel 4 in Form einer gemeinsamen Spule (elektrische Wicklung) zugeordnet, die sich um den Außenumfang der beiden Anker 2, 3 erstreckt.

Die beiden Anker 2, 3 sind in einem Ankerraum 5 angeordnet, welcher radial außen von einem Ankerrohr 6 begrenzt ist. Der Ankerraum 5 bildet gleichzeitig einen fluidischen Verbindungskanal 7 zwischen einer Einlassöffnung 8 und einer Auslassöffnung 9 des Doppelankermagnetventils 1. Dabei ist die Einlassöffnung 8 dem ersten Anker 2 zugeordnet, d.h. kann durch diesen in seiner Schließposition verschlossen werden und die Auslassöffnung 9 dem zweiten Anker 3. Der Ankerraum 5 ist radial innerhalb der Spulenmittel 4 angeordnet, wodurch sich die beiden stößelförmigen Anker 2, 3 radial innerhalb der Spulenmittel 4 befinden, also von diesen bzw. deren Spulenwicklung umgeben bzw. umschlossen sind.

Der erste Anker 2 wird mittels einer ersten Rückstellfeder 10 axial von dem zweiten Anker 3 weg in Richtung der Einlassöffnung 8 federkraftbeaufschlagt und der zweite Anker 3 in Richtung der Auslassöffnung 9 mittels einer zweiten Rückstellfeder 11. Beide Rückstellfedern 10, 11 sind als Druckfedern ausgebildet und stützen sich jeweils einends an dem zugehörigen Anker 2, 3 und anderenends an einem gemeinsamen Widerlager 12 ab, das sich axial in einem Bereich zwischen den beiden Ankern 2, 3 befindet.

Bei Bestromung der gemeinsamen Spulenmittel 4 sind die Anker 2, 3 bestrebt, den axialen Luftspalt (Abstand) zwischen den Ankern 2, 3 zu minimieren, so dass die Anker 2, 3 entlang der Verstellachse V aufeinander zu bewegt werden, und zwar entgegen der Federkraft der jeweiligen Rückstellfeder 10, 11. Nach Unterbrechung oder Reduzierung der Bestromung der Spulenmittel werden die Anker 2, 3 mithilfe der Rückstellfedern 10, 11 voneinander weg hin zur jeweiligen Öffnung (erster Anker 2 zur Einlassöffnung 8; zweiter Anker 3 zur Auslassöffnung 9) verstellt.

Aus Fig. 1 ist eine unterschiedliche Dimensionierung der Rückstellfedern 10, 11 ersichtlich. Die Rückstellfedern 10, 11 sind derart unterschiedlich ausgebildet und angeordnet, dass auf den ersten Anker 2 eine größere Schließkraft bzw. Federkraft wirkt als auf den zweiten Anker 3.

Des Weiteren ist zu erkennen, dass die verstellkraftwirksamen Querschnittsflächen der Einlassöffnung 8 und der Auslassöffnung 9, d.h. der jeweils zugehörigen Ventilsitze voneinander unterschiedlich sind - dabei ist die Querschnittsfläche der Einlassöffnung 8 deutlich kleiner als die der Auslassöffnung 9. Zu erkennen ist dies in Fig. 1 an den unterschiedlich gewählten Durchmessern d₁, d₂, wobei es sich bei dem Durchmesser d₁ um den Durchmesser des einlassöffnungsseitigen Ventilsitzes des ersten Ankers 2 und bei dem Durchmesser d₂ um den Durchmesser des auslassöffnungsseitigen Ventilsitzes für den zweiten Anker 3 handelt.

In dem konkreten Ausführungsbeispiel trägt jeder der Anker 2, 3 ein stirnseitiges, elastomeres Dichtelement 13, 14, wobei die Dichtelemente 13, 14 alternativ auch an der entsprechenden Öffnung bzw. am entsprechenden Ventilsitz, d.h. nicht wie hier dargestellt ortsveränderlich sondern ortsfest angeordnet sein können.

Durch die unterschiedlich gestalteten bzw. dimensionierten und/oder vorgespannten Rückstellfedern wirkt auf den ersten Anker 2 eine größere Schließkraft, wodurch sich dieser schneller in Richtung seiner Einlassöffnung 8 bewegt als der zweite Anker 3 in Richtung seiner Auslassöffnung 9 - hierdurch resultieren unterschiedliche Schließzeitpunkte. Die Einlassöffnung 8 wird vor der Auslassöffnung 9 geschlossen, so dass der Druck im Verbindungskanal 7 nach Schließen der Einlassöffnung 8 noch deutlich reduziert wird. Die unterschiedlichen, verstellkraftwirksamen Querschnittsflächen der Ventilsitze bzw. Öffnungen 8, 9 führen dazu, dass auf den zweiten Anker 3 eine größere fluiddruckverursachte Schließkraft wirkt.

Im Folgenden wird das Ausführungsbeispiel gemäß Fig. 2 erläutert, wobei zur Vermeidung von Wiederholungen im Wesentlichen nur auf Unterschiede zu dem Ausführungsbeispiel gemäß Fig. 1 eingegangen wird. Im Hinblick auf die Gemeinsamkeiten wird auf die vorstehende Figurenbeschreibung sowie Fig. 1 verwiesen.

Bei dem Ausführungsbeispiel gemäß Fig. 2 ist der radiale Querschnitt bzw. die magnetflusswirksame Querschnittsfläche des ersten Ankers 2 in einem Axialabschnitt 15, hier beispielhaft und bevorzugt in einem stirnseitigen, dem zweiten Anker 3 zugewandten Axialabschnitt 15 reduziert, so dass es im ersten Anker 2 zu einer schnelleren magnetischen Sättigung aufgrund eines erhöhten magnetischen Widerstandes kommt. Zusätzlich oder alternativ kann der zweite Anker 3 aus einem Material mit einer höheren magnetischen Remanenz und/oder einer geringeren Massendichte ausgebildet sein.

Wie bei dem Ausführungsbeispiel gemäß Fig. 1 sind die Querschnittsflächen der Einlassöffnung 8 und der Auslassöffnung 9 unterschiedlich. Bei Bedarf können auch unterschiedlich dimensionierte bzw. eine unterschiedliche Federkonstante aufweisende Rückstellfedern 10, 11 eingesetzt werden und/oder die Rückstellfedern 10, 11 können unterschiedlich stark vorgespannt sein.

Der bei dem Ausführungsbeispiel gemäß Fig. 2 erzielte Effekt entspricht dem des ersten Ausführungsbeispiels - der erste Anker 2 verschließt schneller die Einlassöffnung 8 als der zweite Anker 3 die Auslassöffnung 9, nachdem die Spulenmittelbestromung unterbrochen oder entsprechend reduziert wurde, wodurch es zu einem erwünschten Druckabbau im Verbindungskanal 7 kommt.

### Bezugszeichen

- 1: Doppelankermagnetventil
- 2: erster Anker
- 3: zweiter Anker
- 4: Spulenmittel
- 5: Ankerraum
- 6: Ankerrohr
- 7: Verbindungskanal
- 8: Einlassöffnung
- 9: Auslassöffnung
- 10: erste Rückstellfeder
- 11: zweite Rückstellfeder
- 12: Widerlager für die Rückstellfedern
- 13: Dichtelement
- 14: Dichtelement
- 15: Axialabschnitt

- V: Verstellachse

- d₁: Durchmesser der verstellkraftwirksamen Querschnittsfläche der Einlassöffnung/einlassöffnungsseitigen Ventilsitzes
- d₂: Durchmesser der verstellkraftwirksamen Querschnittsfläche der Auslassöffnung/auslassöffnungsseitigen Ventilsitzes

## Patentansprüche

1. Doppelankermagnetventil (1), insbesondere zum Ablassen von Wasser aus Kraftstoffsystemen in Kraftfahrzeugen, mit einem ersten Anker (2) und mit einem zweiten Anker (3), die entlang einer gemeinsamen Verstellachse axial einander gegenüberliegen und axial aufeinander zu in eine jeweilige Öffnungsposition und voneinander weg in eine jeweilige Schließposition verstellbar sind, und mit, vorzugsweise am Umfang beider Anker (2, 3) angeordneten, Spulenmitteln (4) zum Erzeugen eines magnetischen Flusses in beiden Ankern (2 3) zum Verstellen derselben entlang der Verstellachse aufeinander zu sowie mit mindestens einer den ersten Anker (2) von dem zweiten Anker (3) axial weg federkraftbeaufschlagenden ersten Rückstellfeder (10) und mindestens einer den zweiten Anker (3) von dem ersten Anker (2) axial weg federkraftbeaufschlagenden zweiten Rückstellfeder (11), wobei dem ersten Anker (2) ein, bevorzugt am ersten Anker (2) angeordnetes, erstes Dichtelement (13) zum Abdichten einer auf der vom zweiten Anker (3) abgewandten Axialseite des ersten Ankers (2) angeordneten Einlassöffnung (8) für unter Druck stehendes Fluid, insbesondere Wasser aus einem KFZ-Kraftstoffsystem, zugeordnet ist und wobei dem zweiten Anker (3) ein, bevorzugt am zweiten Anker (3) angeordnetes, zweites Dichtelement (14) zum Abdichten einer auf der vom ersten Anker (2) abgewandten Axialseite des zweiten Ankers (3) angeordneten Auslassöffnung (9) für das Fluid zugeordnet ist, wobei die Einlassöffnung (8) und die Auslassöffnung (9) über einen, bevorzugt von einem die Anker (2, 3) aufnehmenden Ankerraum (5) gebildeten, Fluidkanal fluidleitend verbunden sind,
**dadurch gekennzeichnet,**
**dass** dem ersten und/oder zweiten Anker (2, 3) Mittel zur Realisierung unterschiedlicher Schließzeitpunkte zum Schließen der Einlassöffnung (8) und der Auslassöffnung (9) zugeordnet sind, derart, dass nach Unterbrechung oder Reduzierung der Spulenmittelbestromung die Einlassöffnung (8) mittels des ersten Ankers (2) schneller verschließbar ist als die Auslassöffnung (9) mittels des zweiten Ankers (3) und dass eine bezogen auf den ersten Anker (2) verstellkraftwirksame Einlassöffnungsquerschnittsfläche kleiner ist als eine bezogen auf den zweiten Anker (3) verstellkraftwirksame Auslassöffnungsquerschnittsfläche.

2. Doppelankermagnetventil nach Anspruch 1,
**dadurch gekennzeichnet,**
**dass** die erste Rückstellfeder (10) den ersten Anker (2) in seiner Schließposition mit einer größeren Federkraft beaufschlagend ausgebildet und angeordnet ist als die zweite Rückstellfeder (11) den zweiten Anker (3) in seiner Schließposition

3. Doppelankermagnetventil nach einem der Ansprüche 1 oder 2,
**dadurch gekennzeichnet,**
**dass** die erste und/oder die zweite Rückstellfeder (10, 11) als Druckfedern ausgebildet und angeordnet sind.

4. Doppelankermagnetventil nach Anspruch 3,
**dadurch gekennzeichnet,**
**dass** sich die erste und die zweite Rückstellfeder (10, 11) jeweils unmittelbar axial an dem zugehörigen ersten bzw. zweiten Anker (2, 3) abstützen und bevorzugt jeweils axial an einem gemeinsamen, in einem Bereich zwischen den Ankern (2, 3) angeordneten Widerlagerelement für die Rückstellfedern (10, 11).

5. Doppelankermagnetventil nach einem der vorhergehenden Ansprüche,
**dadurch gekennzeichnet,**
**dass** die erste Rückstellfeder (10) in ihrer Schließposition eine, vorzugsweise um mindestens 25 %, weiter bevorzugt mindestens 40 %, größere Federvorspannungsspannung aufweist als die zweite Rückstellfeder (11) in ihrer Schließposition und/oder dass die erste Rückstellfeder (10) eine größere, vorzugsweise um mindestens 25 % weiter bevorzugt mindestens 40 % größere Federkonstante aufweist als die zweite Rückstellfeder (11).

6. Doppelankermagnetventil nach einem der vorhergehenden Ansprüche,
**dadurch gekennzeichnet,**
**dass** der erste und der zweite Anker (2, 3) geometrisch unterschiedlich gestaltet sind und/oder aus einem voneinander unterschiedlich magnetisch flussleitenden und/oder eine voneinander unterschiedliche magnetische Remanenz aufweisenden Material ausgebildet sind und/oder dass der erste Anker (2) eine geringere Masse aufweist als der zweite Anker (3).

7. Doppelankermagnetventil nach einem der vorhergehenden Ansprüche,
**dadurch gekennzeichnet,**
**dass** die Mittel magnetisch wirksame Mittel zum Verzögern und/oder Verlangsamen der Verstellbewegung des zweiten Ankers (3) verglichen mit dem ersten Anker (2) umfassen.

8. Doppelankermagnetventil nach Anspruch 7,
**dadurch gekennzeichnet,**
**dass** die Mittel derart ausgebildet sind, dass die magnetische Remanenz im zweiten Anker (3) größer ist als im ersten Anker (2) und/oder dass der magnetische Flusswiderstand im ersten Anker (2) größer ist als im zweiten Anker (3), insbesondere durch Vorsehen eines radialen Verengungsabschnittes in einem Axialabschnitt (15) des ersten Ankers (2).

9. Doppelankermagnetventil nach einem der vorhergehenden Ansprüche,
**dadurch gekennzeichnet,**
**dass** der erste Anker (2, 3) im magnetischen Flusskreis einen Kern für den zweiten Anker (3) bildet und/oder dass der zweite Anker (3) im magnetischen Flusskreis einen Kern für den ersten Anker (2) bildet.

10. Doppelankermagnetventil nach einem der vorhergehenden Ansprüche,
**dadurch gekennzeichnet,**
**dass** sich der erste und der zweite Anker (2, 3) bei Bestromung der Spulenmittel (4) gegenseitig magnetisch anziehend ausgebildet und angeordnet sind.

11. Doppelankermagnetventil nach einem der vorhergehenden Ansprüche,
**dadurch gekennzeichnet,**
**dass** der erste und der zweite, bevorzugt jeweils stößelförmige, Anker (2, 3) im Ankerraum (5) radial innerhalb der Spulenmittel (4) angeordnet sind.

12. Verfahren zum Betreiben eines Doppelankermagnetventils (1) nach einem der vorhergehenden Ansprüche, wobei die Spulenmittel bestromt werden und dadurch die Anker (2, 3) entlang der Verstellachse zum Öffnen der Einlassöffnung (8) und der Auslassöffnung (9) axial aufeinander zu verstellt werden, wodurch Fluid, insbesondere Wasser aus einem KFZ-Kraftstoffsystem, bevorzugt aus einem KFZ-Dieselkraftstoffsystem, durch die Einlassöffnung (8) in den Verbindungskanal (7) strömt und durch diesen zur Auslassöffnung (9) und durch diese hindurch und dass zum Schließen der Einlassöffnung (8) und der Auslassöffnung (9) die Bestromung der Spulenmittel (4) reduziert oder unterbrochen wird, wodurch der erste Anker (2) von der ersten Rückstellfeder (10) in Richtung zur Einlassöffnung (8) in seine Schließposition bewegt wird und der zweite Anker (3) von der zweiten Rückstellfeder (11) in Richtung zur Auslassöffnung (9) in seine Schließposition,
**dadurch gekennzeichnet,**
**dass** nach der Unterbrechung oder Reduzierung der Spulenmittelbestromung der zweite Anker (3) seine Schließposition zum Schließen der Auslassöffnung (9) später erreicht als der erste Anker (2) seine Schließposition zum Schließen der Einlassöffnung (8) und sich der Fluiddruck im Verbindungskanal auf ein Druckniveau abbaut, das geringer ist als ein Fluiddruck in Strömungsrichtung des Fluids vor der Einlassöffnung (8).

13. Verfahren nach Anspruch ,12
**dadurch gekennzeichnet,**
**dass** bei einer Undichtigkeit im Bereich der ersten Einlassöffnung (8) das in den Verbindungskanal strömende Fluid den zweiten Anker (3) in Richtung seiner Schließposition mit einer Schließkraft kraftbeaufschlagt, welche bevorzugt von der aus einer Beaufschlagung der Spulenmittel (4) resultierenden, auf den zweiten Anker (3) wirkenden Magnetkraft nicht überwindbar ist.

14. Verfahren nach einem der Ansprüche 12 oder 13,
**dadurch gekennzeichnet,**
**dass** sich die magnetische Flussdichte im zweiten Anker (3) nach dem Unterbrechen oder Reduzierung der Spulenmittelbestromung langsamer reduziert als im ersten Anker (2).

15. Kraftstoffsystem zur Verwendung in einem Kraftfahrzeug, insbesondere einem Dieselfahrzeug, mit einem Doppelankermagnetventil nach einem der Ansprüche 1 bis 11, welches derart angeordnet und ansteuerbar, insbesondere angesteuert ist, dass mit diesem Wasser aus dem Kraftstoffsystem ablassbar ist.

## Claims

1. Double-armature solenoid valve (1), in particular for draining water from the fuel systems in motor vehicles, with a first armature (2) and a second armature (3) axially opposed to each other along a common displacement axis and arranged axially towards each other and are adjustable in a respective opening position and away from each in a respective closing position, and preferably with coils (4) on the periphery of both armatures (2, 3) for generating a magnetic flux in the two armatures (2, 3) to adjust the same towards each other along the displacement axis and with at least first return spring (10) to adjust the first (2) axially away from the second armature (3), and at least a second return spring (11) to adjust the second armature (3) axially away from the first armature (2), wherein the first armature (2) has, preferably arranged on the first armature (2), the first sealing element (13) for sealing an inlet opening (8) for pressurized fluid arranged on the axial side of the first armature (2) facing away from the second armature (3), this fluid being in particular water from an automotive fuel system, and whereby there is a second sealing element (14), preferably arranged on the second armature (3), for sealing an outlet opening (9) for the fluid on the axial side of the second armature (3) facing away from the first armature (2), wherein the inlet opening (8) and the outlet opening (9) are connected to a fluid channel to conduct the fluid via a receiving armature space (5) formed by the armatures (2, 3),
**characterized**
**in that** at the first and/or second armature (2, 3) there are means for implementing different closing times for closing the inlet opening (8) and the outlet opening (9), such that after the interruption or reduction of the current feed, the inlet opening (8) can be closed faster using first armature (2) than outlet opening (9) by means of the second armature (3) and that the cross section of the inlet opening surface exerting the displacement force in relation to the first armature (2) is smaller than that of the cross section of the outlet opening exerting the adjustment force in relation to the second armature (3).

2. Double-armature solenoid valve according to claim 1,
**characterized,**
**in that** the first return spring (10) is designed and mounted to impinge on the first armature (2) in its closed position with a greater spring force than the second return spring (11) on the second armature (3) in its closed position.

3. Double-armature solenoid valve according to one of claims 1 or 2,
**characterized**
**in that** the first and/or the second return springs (10, 11) are designed and arranged as pressure springs.

4. Double-armature solenoid valve according to claim 3,
**characterized,**
**in that** the first and the second return springs (10, 11) are supported immediately axial of the relevant first or second armatures (2, 3) are supported and preferably in each case, axially on a common abutment element for the return springs (10, 11) in an area between the armatures (2, 3).

5. Double-armature solenoid valve according to one of the preceding claims,
**characterized**
**in that** the first return spring (10), in its closed position, has preferably a greater spring pre-load of at least 25 %, better preferred at least 40 %, than the second return spring (11) in its closed position, and/or in that the first return spring (10) has a greater spring rate of preferably at least 25 %, better preferred at least 40 %, than the second return spring (11).

6. Double-armature solenoid valve according to one of the preceding claims,
**characterized**
**in that** the first and the second armatures (2, 3) are designed geometrically differently and/or are formed of a different from each magnetic flux conducting and/or a mutually different magnetic remanence material and/or that the first armature (2) has a lower mass than the second armature (3).

7. Double-armature solenoid valve according to one of the preceding claims,
**characterized**
**in that** the means comprise magnetically effective means for delaying and/or slowing down the displacement movement of the second armature (3) compared with the first armature (2).

8. Double-armature solenoid valve according to claim 7,
**characterized**
**in that** the means is formed such that the magnetic remanence in the second armature (3) is greater than in the first armature (2) and/or that the magnetic flux resistance in the first armature (2) is greater than in the second armature (3), in particular by providing a radial narrowing section in an axial section (15) of the first armature (2).

9. Double-armature solenoid valve according to one of the preceding claims,
**characterized**
**in that** the first armature (2, 3) forms a core in the magnetic flux circuit for the second armature (3) and/or that the second armature (3) forms a core for the first armature (2) in the magnetic flux circuit.

10. Double-armature solenoid valve according to one of the preceding claims,
**characterized**
**in that** the first and the second armature (2, 3) are formed and arranged to be mutually attracted upon energization of the coil means (4).

11. Double-armature solenoid valve according to one of the preceding claims,
**characterized**
**in that** the first and the second, preferably in each case tappet shaped armatures (2, 3) are arranged in the armature space (5) radially inside the coil means (4).

12. Method of operating a double-armature solenoid valve (1) according to any one of the preceding claims, wherein the coil means are energized and thereby the armatures (2, 3) are axially displaced along the displacement axis for opening the inlet opening (8) and the outlet opening (9), whereby fluid, in particular water from an automotive fuel system, preferably of a motor vehicle diesel fuel system flows through the inlet opening (8) into the connecting channel (7) and through this to the outlet opening (9), and that to close the inlet opening (8) and the outlet opening (9), the energization of the coil means (4) is reduced or interrupted, whereby the first armature (2) is moved by the first return spring (10) in the direction of the inlet opening (8) into its closed position, and the second armature (3) is moved into its closed by the second return spring (11) in the direction of the outlet opening (9),
**characterized**
**in that**, after the interruption or reduction of the energization of the coil means, the second armature (3) reaches its closed position for closing the outlet opening (9) later than the first armature (2) reaches its closed position for closing the inlet opening (8) and the fluid pressure in the connecting channel degrades to a pressure level which is less than a fluid pressure in the fluid flow direction before the inlet opening (8).

13. Method pursuant to claim 12,
**characterized**
**in that** if there is a leak in the area of the first inlet opening (8), the fluid flowing through the connecting channel exerts force on the second armature (3) in the direction of its closed position with a closing force, which preferably cannot be overcome by the magnetic force resulting from the impact of the coil means (4) acting on the second anchor (3).

14. Method according to any one of claims 12 or 13,
**characterized**
**in that** the magnetic flux density in the second armature (3) is more slowly reduced after the interruption or reduction of energization of the coil means than in the first armature (2).

15. Fuel system in a motor vehicle, in particular a diesel vehicle, having a double-armature solenoid valve according to one of claims 1 to 11, which is arranged and controllable in such a manner, and in is particular controlled so that water can be drained from the fuel system.

## Revendications

1. Soupape électromagnétique à double armature (1), en particulier pour évacuer de l'eau hors de systèmes d'alimentation en carburant dans des véhicules automobiles, avec une première armature (2) et avec une deuxième armature (3), qui se font face de façon axiale le long d'un axe de déplacement commun et qui sont déplaçables de façon axiale l'une vers l'autre dans une position ouverte respective et à l'opposé l'une de l'autre dans une position fermée respective, et avec des moyens formant bobine (4) agencés de préférence à la périphérie des deux armatures (2, 3) et destinés à produire un flux magnétique dans les deux armatures (2, 3) dans le but de déplacer celles-ci l'une vers l'autre le long de l'axe de déplacement ainsi qu'avec au moins un premier ressort de rappel (10) appliquant une force élastique éloignant de façon axiale la première armature (2) de la deuxième armature (3) et au moins un deuxième ressort (11) appliquant une force élastique éloignant de façon axiale la deuxième armature (3) de la première armature (2),
dans laquelle il est associé à la première armature (2) un premier élément d'étanchéité (13) agencé de préférence au niveau de la première armature (2) et destiné à rendre étanche à un fluide sous pression, en particulier de l'eau d'un système d'alimentation en carburant de véhicule automobile, une ouverture d'entrée (8) agencée sur le côté axial de la première armature (2) qui est éloigné de la deuxième armature (3)
et dans laquelle il est associé à la deuxième armature (3) un deuxième élément d'étanchéité (14) agencé de préférence au niveau de la deuxième armature (3) et destiné à rendre étanche au fluide une ouverture de sortie (9) agencée sur le côté axial de la deuxième armature (3) qui est éloigné de la première armature (2),
l'ouverture d'entrée (8) et l'ouverture de sortie (9) étant reliées de manière à conduire le fluide par l'intermédiaire d'un canal de fluide formé de préférence par un espace d'armature (5) logeant les armatures (2, 3),
**caractérisée en ce qu'**il est associé à la première et/ou à la deuxième armature (2, 3) des moyens destinés à réaliser des instants de fermeture différents pour fermer l'ouverture d'entrée (8) et l'ouverture de sortie (9) de telle sorte que, après l'interruption ou la réduction de l'alimentation en courant des moyens formant bobine, l'ouverture d'entrée (8) peut être fermée au moyen de la première armature (2) plus rapidement que l'ouverture de sortie (9) au moyen de la deuxième armature (3) et qu'une surface en section transversale d'ouverture d'entrée active par la force de déplacement par rapport à la première armature (2) est plus petite qu'une surface en section transversale d'ouverture de sortie active par la force de déplacement par rapport à la deuxième armature (3).

2. Soupape électromagnétique à double armature selon la revendication 1, **caractérisée en ce que** le premier ressort de rappel (10) est réalisé et agencé de manière à appliquer à la première armature (2) dans sa position fermée une plus grande force élastique que celle appliquée par le deuxième ressort de rappel (11) à la deuxième armature (3) dans sa position fermée.

3. Soupape électromagnétique à double armature selon l'une quelconque des revendications 1 ou 2, **caractérisée en ce que** le premier et/ou le deuxième ressort de rappel (10, 11) sont réalisés et agencés comme des ressorts de pression.

4. Soupape électromagnétique à double armature selon la revendication 3, **caractérisée en ce que** le premier et le deuxième ressort de rappel (10, 11) s'appuient à chaque fois directement de façon axiale contre la première respectivement deuxième armature (2, 3) associée et de préférence à chaque fois de façon axiale contre un élément de butée commun agencé dans une zone entre les armatures (2, 3) et destiné aux ressorts de rappel (10, 11).

5. Soupape électromagnétique à double armature selon l'une quelconque des revendications précédentes, **caractérisée en ce que** le premier ressort de rappel (10) présente dans sa position fermée une plus grande tension de précontrainte de ressort, de préférence d'au moins 25 %, encore plus de préférence d'au moins 40 %, que le deuxième ressort de rappel (11) dans sa position fermée et/ou **en ce que** le premier ressort de rappel (10) présente une plus grande constante de rappel, de préférence d'au moins 25 %, encore plus de préférence d'au moins 40 %, que le deuxième ressort de rappel (11).

6. Soupape électromagnétique à double armature selon l'une quelconque des revendications précédentes, **caractérisée en ce que** la première et la deuxième armature (2, 3) sont réalisées avec une forme géométrique différente et/ou sont réalisées en un matériau présentant une conductibilité de flux magnétique différente et/ou une rémanence magnétique différente et/ou **en ce que** la première armature (2) présente une plus petite masse que la deuxième armature (3).

7. Soupape électromagnétique à double armature selon l'une quelconque des revendications précédentes, **caractérisée en ce que** les moyens comprennent des moyens à action magnétique destinés à retarder et/ou ralentir le déplacement de la deuxième armature (3) en comparaison de la première armature (2).

8. Soupape électromagnétique à double armature selon la revendication 7, **caractérisée en ce que** les moyens sont réalisés de telle sorte que la rémanence magnétique dans la deuxième armature (3) est plus grande que dans la première armature (2) et/ou **en ce que** la résistance au flux magnétique dans la première armature (2) est plus grande que dans la deuxième armature (3), en particulier en prévoyant un tronçon de rétrécissement radial dans un tronçon axial (15) de la première armature (2).

9. Soupape électromagnétique à double armature selon l'une quelconque des revendications précédentes, **caractérisée en ce que** la première armature (2, 3) forme dans le circuit de flux magnétique un noyau pour la deuxième armature (3) et/ou **en ce que** la deuxième armature (3) forme dans le circuit de flux magnétique un noyau pour la première armature (2).

10. Soupape électromagnétique à double armature selon l'une quelconque des revendications précédentes, **caractérisée en ce que** la première et la deuxième armature (2, 3) sont réalisées et agencées de manière à exercer une attraction magnétique mutuelle lorsque les moyens formant bobine (4) sont alimentés en courant.

11. Soupape électromagnétique à double armature selon l'une quelconque des revendications précédentes, **caractérisée en ce que** la première et la deuxième armature (2, 3), de préférence à chaque fois en forme de poussoir, sont agencées dans l'espace d'armature (5) de façon radiale à l'intérieur des moyens formant bobine (4).

12. Procédé de fonctionnement d'une soupape électromagnétique (1) à double armature selon l'une quelconque des revendications précédentes, dans lequel les moyens formant bobine sont alimentés en courant et les armatures (2, 3) sont ainsi déplacées de façon axiale l'une vers l'autre le long de l'axe de déplacement afin d'ouvrir l'ouverture d'entrée (8) et l'ouverture de sortie (9), ce qui fait qu'un fluide, en particulier de l'eau, s'écoule hors d'un système d'alimentation en carburant de véhicule automobile, de préférence d'un système d'alimentation en diesel de véhicule automobile, via l'ouverture d'entrée (8) jusque dans le canal de liaison (7) et via celui-ci jusqu'à l'ouverture de sortie (9) et par celle-ci, et dans lequel, pour fermer l'ouverture d'entrée (8) et l'ouverture de sortie (9), l'alimentation en courant des moyens formant bobine (4) est réduite ou interrompue, ce qui fait que la première armature (2) est déplacée par le premier ressort de rappel (10) en direction de l'ouverture d'entrée (8) dans sa position fermée et la deuxième armature (3) est déplacée par le deuxième ressort de rappel (11) en direction de l'ouverture de sortie (9) dans sa position fermée,
**caractérisé en ce que**, après l'interruption ou la réduction de l'alimentation en courant des moyens formant bobine, la deuxième armature (3) atteint sa position fermée pour fermer l'ouverture de sortie (9) plus tard que la première armature (2) atteint sa position fermée pour fermer l'ouverture d'entrée (8) et la pression de fluide dans le canal de liaison diminue à un niveau de pression qui est inférieur à une pression de fluide dans le sens d'écoulement du fluide avant l'ouverture d'entrée (8).

13. Procédé selon la revendication 12, **caractérisé en ce que**, en cas de non-étanchéité dans la zone de la première ouverture d'entrée (8), le fluide s'écoulant dans le canal de liaison applique une force sur la deuxième armature (3) en direction de sa position fermée avec une force de fermeture qui de préférence ne peut pas être surmontée par la force magnétique résultant d'une alimentation des moyens formant bobine (4) et agissant sur la deuxième armature (3).

14. Procédé selon l'une quelconque des revendications 12 ou 13, **caractérisé en ce que** la densité de flux dans la deuxième armature (3) après l'interruption ou la réduction de l'alimentation en courant des moyens formant bobine est réduite plus lentement que dans la première armature (2).

15. Système d'alimentation en carburant destiné à être utilisé dans un véhicule automobile, en particulier dans un véhicule diesel, avec une soupape électromagnétique à double armature selon l'une quelconque des revendications 1 à 11, qui est agencé et commandable, en particulier commandé, de telle sorte qu'il permet d'évacuer de l'eau hors du système d'alimentation en carburant.
